(19) Europäisches Patentamt
European Patent Office
Office européen des brevets

(11) Veröffentlichungsnummer: **0 386 511 A2**

(12) # EUROPÄISCHE PATENTANMELDUNG

(21) Anmeldenummer: **90103100.5**

(51) Int. Cl.[5]: **C08L 83/10, C08L 69/00**

(22) Anmeldetag: **17.02.90**

(30) Priorität: **03.03.89 DE 3906919**

(43) Veröffentlichungstag der Anmeldung:
**12.09.90 Patentblatt 90/37**

(84) Benannte Vertragsstaaten:
**DE ES FR GB IT NL**

(71) Anmelder: **BAYER AG**

**D-5090 Leverkusen 1 Bayerwerk(DE)**

(72) Erfinder: **Tacke, Peter, Dr.**
**Brandenburger Strasse 12**
**D-4150 Krefeld 12(DE)**
Erfinder: **Kircher, Klaus, Dr.**
**Alfred-Kubin-Strasse 3**
**D-5090 Leverkusen(DE)**
Erfinder: **Paul, Winfried, Dr.**
**Mobay Corporation, Mobay Road, Building 8**
**Pittsburgh, PA, 15 205(US)**
Erfinder: **Grigo, Ulrich, Dr.**
**Michelsheide 9**
**D-4152 Kempen 3(DE)**
Erfinder: **Hähnsen, Heinrich, Dr.**
**Homberger Strasse 16**
**D-4100 Duisburg 14(DE)**

(54) **Flammwidrige Polydiorganosiloxan-Polycarbonat-Blockcopolymere.**

(57) Gegenstand der vorliegenden Erfindung sind Mischungen, bestehend aus

A) thermoplastischen Polydiorganosiloxan-Polycarbonat-Blockcopolymeren,

B) Polytetrafluorethylenpolymerisaten,

C) Alkalisalzen und/oder Erdalkalisalzen von Fluorhaltigen Komplexsäuren, der Kohlensäure, der Vanadinsaure und der Borsäure, sowie gegebenenfalls üblichen Additiven, und ein Verfahren zur Herstellung der erfindungsgemäßen Mischungen.

EP 0 386 511 A2

## Flammwidrige Polydiorganosiloxan-Polycarbonat-Blockcopolymere

Gegenstand der vorliegenden Erfindung sind Mischungen bestehend aus

A) 98 Gew.-% bis 99,98 Gew.-% an thermoplastischen Polydiorganosiloxan-Polycarbonat-Blockcopolymeren, mit mittlerem Molekulargewicht $\overline{M}w$ von 10.000 bis 200.000 und mit einem Gehalt an aromatischen Carbonatstruktureinheiten zwischen 70 Gew.-% und 99 Gew.-% und einem Gehalt an Diorganosiloxy-Einheiten zwischen 30 Gew.-% und 1 Gew.-%, wobei die Blockcopolymeren, ausgehend von $\alpha,\omega$-Bishydroxyaryloxypolydiorganosiloxanen, mit einem Polymerisationsgrad $P_{\pi}$ von 5 bis 100 hergestellt werden und

B) 0,01 Gew.-% bis 0,5 Gew.-% an Polytetrafluorethylenpolymerisaten mit einem mittleren Teilchendurchmesser von 0,1 µm bis 700 µm, vorzugsweise von 0,2 µm bis 600 µm und einem $\overline{M}_n$ - (Zahlenmittelmolekulargewicht) von 4.000 bis 900.000, vorzugsweise von 50.000 bis 800.000,

C) 0,01 bis 1,5 Gew.-% an Alkalisalzen und/oder Erdalkalisalzen von Fluor-haltigen Komplexsäuren, der Kohlensäure, der Vanadinsäure und der Borsäure, wobei die Summe der Komponenten A) + B) + C) jeweils 100 Gew.-% beträgt.

Das bevorzugte $\overline{M}w$ der Blockcopolymeren liegt zwischen 20.000 und 80.000; der bevorzugte Gehalt an Carbonatstruktureinheiten liegt zwischen 80 Gew.-% und 97 Gew.-%, der bevorzugte Gehalt an Polydiorganosiloxan-Blöcken liegt zwischen 20 Gew.-% und 3 Gew.-% und der bevorzugte Polymerisationsgrad der Polydiorganosiloxane-Blöcke liegt zwischen 5 und 80.

Die Komponente A kann auch eine Mischung aus Polydiorgano-Polycarbonat-Blockcopolymeren mit anderen siloxanfreien, aromatischen, thermoplastischen Polycarbonaten sein, wobei der Gesamtgehalt an Diorganosiloxy-Einheiten in diesen Mischungen wieder zwischen 1 Gew.-% und 30 Gew.-%, vorzugsweise zwischen 3 Gew.-% und 20 Gew.-% liegt.

Gemäß US-PS 3 651 174 und US-PS 3 742 085 sind flammwidrige Polycarbonatformmassen bekannt, die auf Basis halogenierter Polycarbonate, Erdalkalicarbonate und Polytetrafluorethylene und/oder Organosiloxanpolymere enthalten. Polycarbonate mit chemisch eingebauten Siloxanresten sind nicht involviert.

Aus der DE-OS 28 00 923 (MO 1964) sind Mischungen von Polycarbonaten mit anorganischen Salzen und Polytetra fluorethylenen bekannt. Polycarbonate mit chemisch eingebauten Siloxanresten sind wiederum nicht involviert. Siehe dazu auch erweitertes US-equivalent Nr. 4 223 100.

Aus der DE-OS 25 35 262 ist bekannt, daß der Zusatz von fluorierten Polyolefinen, z.B. Polytetrafluorethylen, zu Polycarbonaten, die organische Alkalisalze enthalten, das Abtropfen brennender Teilchen unterdrücken. Man erreicht jedoch auf diese Weise nicht Brandverhalten V O bei Formteil-Wanddicken < 1 mm.

Bekannt sind auch derartige Systeme, die jedoch Halogenpräsenz zusätzlich zur Polytetrafluorethylenkomponente verlangen (siehe beispielsweise US-PS 4 208 489 (Le A 17 759) DE-OS 29 18 882 (Le A 19 568) und DE-OS 29 18 883 (Le A 19 569)).

Aus der DE-OS 34 42 281 (Le A 23 338) sind flammwidrige Polycarbonatformmassen bekannt, die aus halogenfreien Polycarbonaten, Alkalisalzen, Tetrafluorethylenpolymerisaten und halogenfreien Pfropfpolymerisaten bestehen. Polycarbonate mit chemisch eingebauten Siloxanresten sind in der DE-OS 34 42 281 nicht involviert.

Polydiorganosiloxan-Polycarbonat-Blockcopolymere sind bekannt (siehe beispielsweise DE-OS 33 34 782 (Le A 22 594) und Journal of Polymer Science, Polymer Letters Edition, May 1974, Vol. 12, Seiten 247 bis 252 (1974)). Sie haben ein günstigeres Brandverhalten als beispielsweise reines Bisphenol A-Polycarbonat.

Siloxan-Segmente sind jedoch kostspielig; man verwendet davon nur so viel, wie zur Verbesserung von Eigenschaften, wie z.B. Tieftemperaturzähigkeit, die anders nicht erreichbar sind, unbedingt erforderlich erscheint. Es hat sich außerdem gezeigt, daß mit Siloxan-Segmenten alleine keine ausreichende Brandwidrigkeit bei Formteilen mit Wanddicken <1 mm erreichbar ist.

Es wurde nun gefunden, daß gegenüber den flammwidrigen Polycarbonatformmassen gemäß DE-OS 28 00 923 bei den Siloxan-Polycarbonat-Cokondensaten die Kombinationen aus Salzen von Fluor-haltigen Komplexsäuren, der Kohlen-Vanadin- und Borsäure und Polytetrafluorethylen erheblich wirksamere Brandschutzmittel sind. Außerdem wird bei den Siloxan-Polycarbonat-Cokondensaten durch die genannten Brandschutzmittel die Zähigkeit nur minimal beeinträchtigt.

Bekannt sind auch flammwidrige Formmassen, die Polysiloxan-Polycarbonat-Blockcopolymere und Polytetrafluorethylene enthalten. (Siehe beispielsweise EP-OS 0 174 493, DOS 3 615 768, DOS 3 617 511, DOS 3 628 904 und DOS 3 629 546). Diese Brandschutzsysteme beruhen jedoch auf anderen Additivsystemen.

Aus US-Patent 4 767 818 sind Polycarbonatformmassen bekannt, die Polydiorganosiloxan-Polycarbonat-Blockpolymere und ein Flammchutzsystem enthaltend. Das Flammschutzsystem kann Teflon einbeziehen, als Salze sind die speziellen, erfindungsgemäß zu verwendenden nicht genannt.

Die erfindungsgemäß verwendbaren Polydiorganosiloxan-Polycarbonat-Blockcopolymeren gemäß Komponente A) sind solche auf Basis der Diphenole der Formel (I) und der Formel (I a)

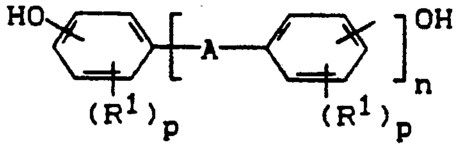

(I)

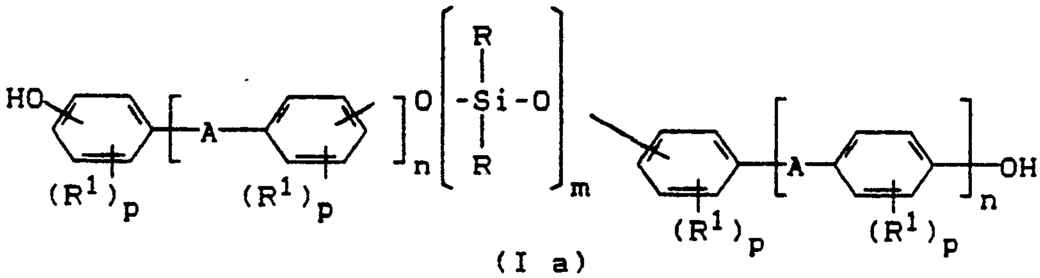

(I a)

worin $R^1$ gleich oder verschieden sind und Cl, Br oder $CH_3$ sind, p Null, 1 oder 2 ist,
A eine Einfachbindung $C_1$-$C_5$-Alkylen, ein $C_2$-$C_5$-Alkyliden, ein $C_5$-$C_6$-Cycloalkyliden, -S- oder -$SO_2$-, n = 1 oder Null ist, die R gleich oder verschieden sind und ein lineares $C_1$-$C_{20}$-Alkyl verzweigtes $C_3$-$C_{20}$-Alkyl oder $C_6$-$C_{20}$-Aryl, vorzugsweise $CH_3$ und m eine ganze Zahl zwischen 5 und 100, vorzugsweise zwischen 5 und 80 ist, und wobei der Gewichtsanteil an Diphenolen der Formel (I a) in den Copolycarbonaten jeweils so bemessen ist, daß der Gehalt an Diorganosiloxy-Einheiten

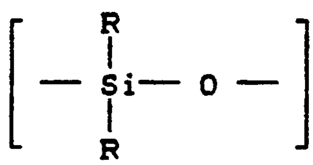

im Copolycarbonat, das für Komponente A eingesetzt wird, zwischen 1 und 30 Gew.-%, vorzugsweise zwischen 3 und 20 Gew.-% beträgt.

Der Gehalt an aromatischen Carbonatstruktureinheiten

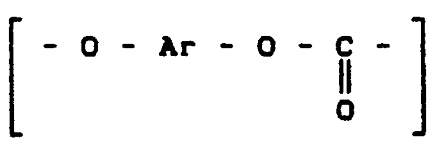

entspricht der komplementären Menge von 99 bis 70 Gew.-%, vorzugsweise von 97 bis 80 Gew.-%, worin -O-Ar-O- ein Si-freier Diphenolatrest ist.

Andere, siloxanfreie thermoplastische, aromatische Polycarbonate sind vorzugsweise solche, die als Diphenole nur solche der Formel (I) eingebaut enthalten.

In den Fällen, in denen die Komponente (A) ein Gemisch aus siloxanhaltigen Polycarbonaten und siloxanfreien Polycarbonaten ist, können die siloxanhaltigen Polycarbonate auch einen Gehalt an Diorganosiloxy-Einheiten von mehr als 30 Gew-% enthalten, sofern durch die Abmischung mit den siloxanfreien Polycarbonaten der Gehalt im Polycarbonatgemisch wiederum zwischen 1 und 30 Gew.-% liegt.

Die Diphenole der Formel (I) sind entweder literaturbekannt oder nach literaturbekannten Verfahren herstellbar.

Polydiorganosiloxane mit Hydroxyaryloxy-Endgruppen gemäß Formel (I a) sind ebenfalls bekannt (siehe z.B. US-Patent 3 419 634) bzw. nach literaturbekannten Verfahren herstellbar.

Die Herstellung der erfindungsgemäß geeigneten Polydiorganosiloxan-Polycarbonat-Blockcopolymeren gemäß Komponente A) ist literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. [Bezüglich polydiorganosiloxanhaltigen Polycarbonaten, siehe z. B. DE-OS 3 334 782 (Le A 22 594)].

Geeignete Kettenabbrecher sind z. B. Phenol oder p-tert.-Butylphenol, aber auch langkettige Alkylphenole wie 4-(1,3-Tetramethyl-butyl)phenol gemäß DE-OS 2 842 005 (Le A 19 006) oder Monoalkylphenole oder Dialkylphenole mit insgesamt 8 bis 20 C-Atomen in den Alkylsubstituenten gemäß deutscher Patentanmeldung P 3 506 472.2 (Le A 23 654), wie z. B. p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol.-%, bezogen auf die Summe der jeweils eingesetzten Diphenole (II) und (II a).

Die erfindungsgemäß geeigneten Polycarbonate gemäß komponente A) haben mittlere Gewichtsmittelmolekulargewichte ( $\overline{M}$w, gemessen z. B. durch Ultrazentrifugation oder Streulichtmessung) von 10.000 bis 200.000, vorzugsweise von von 20.000 bis 80.000.

Siloxanfreie thermoplastische, aromatische Polycarbonate sind ebenfalls literaturbekannt

Geeignete Diphenole für die Herstellung der Polycarbonate sind beispielsweise Hydrochinon, Resorcin, Dihydroxydiphenyle, Bis-(hydroxyphenyl)-alkane, Bis-(hydroxyphenyl)-cycloalkane, Bis-(Hydroxyphenyl)-sulfide, Bis-(hydroxyphenyl)-ether, Bis-(hydroxyphenyl)-ketone, Bis(-hydroxyphenyl)-sulfoxide, Bis-(hydroxyphenyl)-sulfone und α,α′-Bis-(hydroxyphenyl)-diisopropylbenzole sowie deren kernalkylierte und kernhalogenierte Verbindungen. Diese und weitere Diphenole sind z. B. in den US-Patentschriften 3 028 365, 3 272 601, 3 148 172, 3 062 781, 2 991 273, 3 271 367, 2 999 835, 2 970 131 und 2 999 846, in den deutschen Offenlegungsschriften 1 570 703, 2 063 050, 2 063 052, 2 211 956, 2 211 957, der französischen Patentschrift 1 561 518 und in der Monographie von H. Schnell, "Chemistry and Physics of Polycarbonates", Interscience Publishers, New York, beschrieben.

Bevorzugte Diphenole sind z. B.

4,4′-Dihydroxydiphenyl, 2,4-Bis-(4-hydroxyphenyl)-2-methylbutan, α,α′-Bis-(4-hydroxyphenyl)-p-diisopropyl benzol, 2,2-Bis-(3-methyl-4-hydroxyphenyl)-propan, 2,2-Bis(3-chlor-4-hydroxyphenyl)-propan, Bis-(3,5-dimethyl-4-hydroxyphenyl-methan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan und α,α′-Bis-(3,5-dimethyl-4-hydroxyphenyl)-p-diisopropylbenzol.

Besonders bevorzugte Diphenole sind z. B.

2,2-Bis-(4-hydroxyphenyl)-propan (Bisphenol A), 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Diphenole der Formel (I a) sind solche, in denen R Methyl, Ethyl, Propyl, n-Butyl, tert.-Butyl und Phenyl ist.

Bevorzugte Diphenole der Formel (I) sind die der Formel (I b)

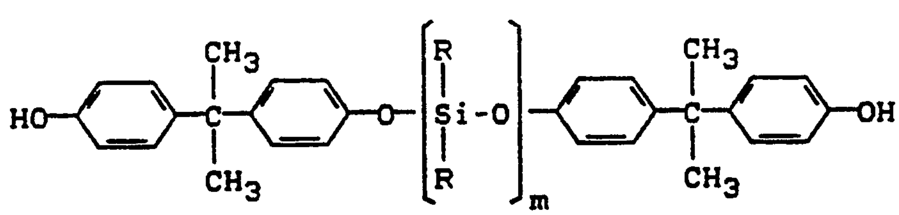

(I b)

worin die R's gleich sind und die vorstehend genannte Bedeutung haben, also Methyl etc. und Phenyl bedeuten und m wiederum um eine ganze Zahl zwischen 5 und 100, vorzugsweise zwischen 20 und 80 ist.

Die erfindungsgemäß geeigneten siloxanhaltigen und siloxanfreien Polycarbonate gemäß Komponente A) können in bekannter Weise verzweigt sein, und zwar vorzugsweise durch den Einbau von 0,05 bis 2,0 Mol.-%, bezogen auf die Summe der eingesetzten Diphenole, an drei- oder mehr als dreifunktionellen Verbindungen, z. B. solchen mit drei oder mehr als drei phenolischen OH-Gruppen (siehe beispielsweise DE-OS 33 47 071 (Le A 22 802)).

Bevorzugte Polydiorganosiloxan-Polycarbonat-Blockcopolymere sind Copolycarbonate der Diphenole

der Formel (I) mit Diphenolen der Formel (I a).

Die erfindungsgemäß geeigneten Polydiorganosiloxan-Polycarbonate-Blockpolymeren lassen sich auch durch ihre relativen Lösungsviskositäten von 1,16 bis 1,5 charakterisieren, wobei $\eta_{rel}$ in $CH_2Cl_2$ bei 25° C und einer Konzentration von 0,5 g pro 100 ml Lösung gemessen ist.

Die bevorzugte Menge an Komponente A) beträgt zwischen 99 Gew.-% und 99,9 Gew.-%.

Die Teilchenform der erfindungsgemäß geeigneten Polytetrafluorethylene gemäß Komponente B) kann rund, faserförmig, jedoch auch unregelmäßig sein.

Die Herstellung, Verarbeitung, Eigenschaften von Polytetrafluorethylen (PTFE) sind beispielsweise beschrieben in Ullmanns Encyklopädie der technischen Chemie, 4. Auflage, Band 19, S. 89 f, Verlag Chemie, Weinheim, 1980.

Über Polytetrafluorethylene informieren weiterhin die Druckschriften Kunststoffe Hoechst, "Hostaflon", Ausgabe Juli 1984; "Teflon" von DuPont de Nemours, Ausgabe Juni 1987.

Die bevorzugte Menge an Polytetrafluorethylenpolymerisaten gemäß Komponente B) liegt zwischen 0,05 Gew.-% und 0,3 Gew.-%.

Geeignete Alkalisalze und Erdalkalisalze gemäß Komponente e) sind beispielsweise $KBF_4$, $K_3AlF_6$, $KAlF_4$, $K_2SiF_6$, $Na_3AlF_3$, $NaSbF_6$, $Na_3FeF_6$, $NaPF_6$, $Na_2TiF_6$, $NaBF_4$, $K_2TaF_7$, $K_2NbF_7$, $KSbF_6$, $K_2NiF_6$, $K_2TiF_6$, $LiBF_4$, $LiPF_6$, $Li_2BeF_4$m $Li_3AlF_6$, $MgSiF_6$, $BaSiF_6$, $Na_2CO_3$, $K_2CO_3$, $MgCO_3$, $CaCO_3$, $BaCO_3$ und $BaVO_3$. Bevorzugt ist $Na_3AlF_6$ (Kryolith).

Die bevorzugte Menge an Salzkomponente C) beträgt 0,05 Gew.-% bis 0,7 Gew.-%. Die als Komponente C) geeigneten Salze sind als solche literaturbekannt oder nach literaturbekannten Verfahren herstellbar. Sie müssen vor der erfindungsgemäßen Verwendung gut getrocknet und feinst zerteilt, vorzugsweise auf Korngrößen <10 µm zerteilt sein.

Die Herstellung der erfindungsgemäßen Mischungen aus den Komponenten A), B) und C) kann in üblichen Mischaggrega ten in der Schmelze erfolgen. Als solche sind besonders Extruder und Kneter zu nennen. Die Bedingungen bezüglich Temperatur und Druck sind die üblichen für die Abmischung von Thermoplasten, ebenso die Isolierung nach erfolgter Vermischung.

Gegenstand der vorliegenden Erfindung ist somit auch ein Verfahren zur Herstellung der erfindungsgemäßen Mischungen bestehend aus den Komponenten A), B) und C), das dadurch gekennzeichnet ist, daß man die Komponenten in üblichen Mischaggregaten in der Schmelze vermischt und anschließend in üblicher Weise isoliert.

Eine Alternative zur simultanen Vermischung der Komponenten A), B) und C) besteht darin, daß man vorab ein Konzentrat aus den Komponenten B) und C) herstellt und dieses anschließend der Polydiorganosiloxan-Polycarbonat-Blockopolymer-Komponente A) in vorstehend beschriebener Weise einverleibt.

Mit der Vermischung der Komponenten A), B) und C) kann die Einarbeitung der für die Polycarbonate üblichen Additive wie Stabilisatoren, Pigmente, Fließmittel, Entformungsmittel und Verstärkungsstoffe in den üblichen Mengen erfolgen.

Geeignete Additive sind beispielsweise Glasfasern, Kohlenstoff-Fasern von organischen oder anorganischen Polymeren, Talkum, Kieselgel, Quarzmehl, Fettsäureestern, Phosphitstabilisatoren, Ruß und $TiO_2$.

Gegenstand der vorliegenden Erfindung ist somit auch ein Verfahren zur Herstellung der erfindungsgemäßen Mischungen bestehend aus A), B) und C) und mindestens einem Zusatz, ausgewählt aus der Gruppe der Stabilisatoren, Pigmente, Fließmittel, Entformungsmittel und Verstärkungssstoffe, dadurch gekennzeichnet, daß man diese in die erfindungsgemäße Vermischung der Komponenten A) mit B) und mit C) einbezieht.

Die Verarbeitung der erfindungsgemäßen Formmassen zu Formteilen, Halbzeug, und Folien, kann auf den üblichen Verarbeitungsmaschinen, wie Spritzguß- und Extrusionsanlagen erfolgen.

Die erfindungsgemäßen Mischungen finden als Formmassen bzw. Formteile Einsatz im Maschinenbau, insbesondere überall dort, wo flammwidrige Polycarbonatformmassen Verwendung finden.

## Beispiele

Für die Versuche wurde ein Polycarbonat (PC) auf Basis BPA (2,2-Bis-(4-hydroxyphenyl)-propan) der relativen Lösungsviskosität ($\eta_{rel}$) 1,247 verwendet, gemessen an einer Lösung von 0,5 g PC in 100 ml $CH_2Cl_2$-Lösung bei 25° C.

Folgende Siloxancokondensate (SiCoPC) wurden hergestellt (analog den Beispielen 2a und 3 der DE-OS 33 34 782) mit Siloxan-Segmenten von $P_n$ = 10 und 100. Alle Baugruppen waren statistisch verteilt.

| | $\eta_{rel}$ |
|---|---|
| SiCoPC 1 = 5 Gew.-% Siloxan $P_n$ = 10 in PC | 1,263 |
| 2 = 5 Gew.-% Siloxan $P_n$ = 100 in PC | 1,251 |
| 3 = 10 Gew.-% Siloxan $P_n$ = 10 in PC | 1,256 |
| 4 = 10 Gew.-% Siloxan $P_n$ = 100 in PC | 1,249 |
| 5 = 50 Gew.-% Siloxan $P_n$ = 10 in PC | 1,253 |
| 6 = 50 Gew.-% Siloxan $P_n$ = 100 in PC | 1,258 |
| 7 = Granulatgemisch aus 20 Gew.-% SiCoPC 5 mit 80 Gew.-% PC | |
| 8 = Granulatgemisch aus 20 Gew.-% SiCoPC 6 mit 80 Gew.-% PC | |

Die Zusammensetzungen der hergestellten Mischungen sowie ihre Eigenschaften sind in Tabelle 1 zusammengefaßt. Mit Stern gekennzeichnete Mischungen dienen dem Vergleich. Die Compoundierung erfolgt in einem Doppelwellenextruder Typ ZSK 32 der Firma Werner und Pfleiderer. Als Salz wurde Kryolith der mittleren Teilchengröße 8 µm verwendet.

Als feinteilige Polytetrafluorethylene (PTFE) wurden die Handelsprodukte Hostaflon TF 2027 (I) und Hostaflon TF 1740 (III) der Hoechst AG sowie Teflon 30-N (III) von DuPont eingesetzt.

Die mittlere Teilchengröße der 3 PFTE-Typen lag bei 550, 40, 0,23 µm.

Zum Vergleich wurden auch die folgenden aus der Literatur bekannten Brandschutzmittel verwendet:

Na-Benzolsulfonat (NBS)

Dekabromdiphenylether (DBDPE)

Kaliumsalz der Perfluorbutansulfonsäure (KFBS)

Die Brandprüfung erfolgte an nach dem Spritzgießverfahren hergestellten Prüfstäben der Abmessungen 127 x 12,7 x 0,8 mm gemäß der Prüfnorm von UL (Underwriters Laboratories) 94 nach Konditionierung der Prüfkörper über 7 Tage bei 70 °C. Die Prüfergebnisse enhält Tabelle 1.

<u>Tabelle 1</u>

| Beispiel | SiCoPC Typ | SiCoPC Gew.-% | Kryolith Gew.-% | PTFE, Gew.-% I | PTFE, Gew.-% II | PTFE, Gew.-% III | Andere Brandschutzmittel Gew.-% | Brandverhalten nach UL/94, 0,8 mm Prüfstabdicke, nach Konditionierung 7 d bei $70^0$C, Klasse | Gesamte Nachbrennzeit (sec) von 5 Prüfstäben |
|---|---|---|---|---|---|---|---|---|---|
| 1* | PC | 99,9 | - | - | - | - | KFBS, 0,1 | V-1 | 183 |
| 2* | PC | 99,9 | - | - | - | - | NBS, 0,1 | V-1 | 197 |
| 3* | PC | 99,8 | - | - | 0,1 | - | KFBS, 0,1 | V-0 | 38 |
| 4* | PC | 99,8 | - | - | 0,1 | - | NBS, 0,1 | V-0 | 41 |
| 5* | PC | 99,6 | - | - | - | - | KFBS, 0,4 | V-1 | 158 |
| 6* | PC | 99,6 | - | - | - | - | NBS, 0,4 | V-0 | 44 |
| 7* | PC | 99,5 | - | - | 0,1 | - | KFBS, 0,4 | V-1 | 219 |
| 8* | PC | 99,5 | - | - | 0,1 | - | NBS, 0,4 | V-0 | 37 |
| 9* | PC | 99,6 | 0,4 | - | - | - | - | V-2 | 187 |
| 10* | PC | 99,5 | 0,4 | - | 0,1 | - | - | V-2 | 171 |
| 11* | PC | 99,4 | 0,4 | - | 0,2 | - | - | V-1 | 216 |
| 12* | 1 | 100 | - | - | - | - | - | brennt ab | - |
| 13* | 2 | 100 | - | - | - | - | - | brennt ab | - |
| 14* | 3 | 100 | - | - | - | - | - | V-1 | 236 |
| 15* | 4 | 100 | - | - | - | - | - | V-1 | 227 |
| 16* | 8 | 100 | - | - | - | - | - | V-1 | 136 |
| 17* | 1 | 99,6 | 0,4 | - | - | - | - | V-1 | 241 |

Tabelle 1 (Fortsetzung)

| Beispiel | SiCoPC Typ | SiCoPC Gew.-% | Kryolith Gew.-% | PTFE, Gew.-% I | PTFE, Gew.-% II | PTFE, Gew.-% III | Andere Brandschutzmittel Gew.-% | Brandverhalten nach UL/94, 0,8 mm Prüfstabdicke, nach Konditionierung 7 d bei 70°C, Klasse | Gesamte Nachbrennzeit (sec) von 5 Prüfstäben |
|---|---|---|---|---|---|---|---|---|---|
| 18* | 2 | 99,6 | 0,4 | - | - | - | - | V-1 | 227 |
| 19* | 3 | 99,6 | 0,4 | - | - | - | - | V-1 | 153 |
| 20* | 4 | 99,6 | 0,4 | - | - | - | - | V-1 | 168 |
| 21* | 8 | 99,6 | 0,4 | - | - | - | - | V-1 | 87 |
| 22 | 1 | 99,5 | 0,4 | - | 0,1 | - | - | V-0 | 43 |
| 23 | 2 | 99,5 | 0,4 | - | 0,1 | - | - | V-0 | 41 |
| 24 | 3 | 99,5 | 0,4 | - | 0,1 | - | - | V-0 | 33 |
| 25 | 4 | 99,5 | 0,4 | - | 0,1 | - | - | V-0 | 42 |
| 26 | 8 | 99,5 | 0,4 | - | 0,1 | - | - | V-0 | 45 |
| 27 | 4 | 99,5 | 0,4 | 0,1 | - | - | - | V-0 | 38 |
| 28* | 2 | 99,5 | - | - | 0,1 | - | KFBS, 0,4 | V-1 | 114 |
| 29* | 4 | 99,5 | - | - | 0,1 | - | NBS, 0,4 | V-1 | 92 |
| 30 | 7 | 99,5 | 0,4 | - | 0,1 | - | - | V-0 | 27 |

## Ansprüche

1. Mischungen bestehend aus

A) 98 Gew.-% bis 99,98 Gew.-%, an thermoplastischen Polydiorganosiloxan-Polycarbonat-Blockcopolymeren, mit mittlerem Molekulargewicht $\overline{M}w$ von 10.000 bis 200.000 und mit einem Gehalt an aromatischen Carbonatstruktureinheiten zwischen 70 Gew.-% und 99 Gew.-% und einem Gehalt an Diorganosiloxy-Einheiten zwischen 30 Gew.-% und 1 Gew.-%, wobei die Blockcopolymeren, ausgehend von α,ω-Bishydroxyaryloxy-polydiorganosiloxanen, mit einem Polymerisationsgrad Pn von 5 bis 100 hergestellt werden und

B) 0,01 Gew.-% bis 0,5 Gew.-%, an Polytetrafluorethylenpolymerisaten mit einem mittleren Teilchendurchmesser von 0,1 µm bis 700 µm und einem $\overline{M}w$ (Zahlenmittelmolekulargewicht) von 4.000 bis 900.000, und

C) 0,01 Gew.-% bis 1,5 Gew.-% an Alkalisalzen und/oder Erdalkalisalzen von Fluor-haltigen Komplexsäuren, der Kohlensäure, der Vanadinsäure und der Borsäure, wobei die Summe der Komponenten A) + B) + C) jeweils 100 Gew.-% beträgt.

2. Mischungen gemäß Anspruch 1, bestehend aus
99 Gew.-% bis 99,9 Gew.-% der Komponente A),
0,05 Gew.-% bis 0,3 Gew.-% der Komponente B) und
0,05 Gew.-% bis 0,7 Gew.-% der Komponente C).

3. Mischungen gemäß Anspruch 1, bestehend zusätzlich aus einem Zusatz ausgewählt aus der Gruppe der Stabilisatoren, Pigmente, Fließmittel, Entformungsmittel und Verstärkungsstoffe.

4. Verfahren zur Herstellung der Mischungen der Ansprüche 1 und 2, dadurch gekennzeichnet, daß man die Komponenten A), B) und C) in üblichen Mischaggregaten in der Schmelze vermischt und anschließend in üblicher Weise isoliert.

5. Verfahren zur Herstellung der Mischungen des Anspruchs 3, gemäß dem Verfahren des Anspruchs 4, dadurch gekennzeichnet, daß man mindestens einen Zusatz auswählt aus der Gruppe der Stabilisatoren, Pigmente, Fließmittel, Entformungsmittel und Verstärkungsstoffe einbezieht